# EUROPÄISCHE PATENTANMELDUNG

(11) **EP 2 592 638 A1**
(43) Veröffentlichungstag der Anmeldung: **15.05.2013**
(21) Anmeldenummer: 12189520.5
(22) Anmeldetag: 23.10.2012
(51) Int. Cl.: H01H 35/00, G01F 23/22

(54) **Drehflügelgrenzschalter und Verfahren zum Betreiben desselben**

(30) Priorität: 14.11.2011 DE 102011086259
(71) Anmelder: ENDRESS + HAUSER WETZER GmbH + Co. KG, 87484 Nesselwang (DE)
(72) Erfinder: Pöllath, Rainer, 87494 Rückholz (DE); Zeller, Robert, 86983 Lechbruck (DE); Schuttenberg, Detlef, 87600 Kaufbeuren (DE); Konrad, Stephan, 87669 Rieden (DE); Stahl, Marc, 87487 Wiggensbach (DE)
(74) Vertreter: Andres, Angelika Maria

(57) **Zusammenfassung**

Drehflügelgrenzschalter zur Bestimmung und Signalisierung des Füllstands, insbesondere eines Grenzstands, eines Füllguts in einem Behälter, wobei der Drehflügelgrenzschalter eine von einem Motor getriebene Antriebswelle (AW) aufweist, an welcher Antriebswelle (AW) ein Drehflügel anbringbar ist, wobei zur Funktionsüberwachung des Drehflügelgrenzschalters ein erster Signalgeber (EE, AE) vorgesehen ist, der vorzugsweise zur Funktionsüberwachung der Antriebswelle (AW) dient und besonders bevorzugt mit der Antriebswelle (AW) wirkverbunden ist, wobei der erste Signalgeber (EE, AE) ein erstes Ausgangssignal ausgibt, das vorzugsweise zur Störungsmeldung dient, wobei zur Erkennung einer Auslenkbewegung des Motors des Drehflügelgrenzschalters ein zweiter Signalgeber vorgesehen ist, der ein zweites Ausgangssignal ausgibt, wobei ein Signalausgang (NC, NO, COM) zur Signalisierung des Füllstands vorgesehen ist, und wobei eine Ansteuerung des Signalausgangs (NC, NO, COM) vermittels einer elektrischen bzw. elektronischen und/oder mechanischen Schaltanordnung (AN) in Abhängigkeit des ersten Ausgangssignals und des zweiten Ausgangssignals erfolgt.

## Beschreibung

Die Erfindung bezieht sich auf einen Drehflügelgrenzschalter zur Bestimmung und Signalisierung eines Füllstands eines Füllguts.

Ferner bezieht sich die Erfindung auf ein Verfahren zum Betreiben eines Drehflügelgrenzschalters.

In der Industrie werden Flüssigkeiten und Schüttgüter, die zur Herstellung bestimmter Produkte benötigt werden, meist in Behältern wie Silos gelagert. Um den Bestand zu überwachen, werden meist so genannte Grenzstandschalter eingesetzt, die bei Erreichen des zu überwachenden Füllstands ein Signal erzeugen. Beispielsweise werden solche Grenzstandschalter zur Erzeugung eines Alarmsignals im Falle des Erreichens eines maximalen Füllstands verwendet, so dass der Behälter beim Befüllen nicht überläuft.

Zur Überwachung eines vorgegebenen Füllstands eines Schüttguts in einem Behälter sind verschiedenartige Messgeräte bekannt. Die vorliegende Erfindung betrifft einen Drehflügelgrenzschalter. Dieser beruht auf folgendem Prinzip: ein Motor treibt über eine Welle einen daran befestigten Messflügel zur Rotation an, wobei der Messflügel sich in dem Behälter befindet. Trifft das Medium auf den Messflügel, so stellt es einen Widerstand für die Rotationsbewegung dar, wodurch der Messflügel abgebremst oder sogar vollständig angehalten wird. Hierdurch wird der Motor von einer Ruhelage in eine Schaltlage ausgelenkt, d.h. die Stromversorgung des Motors wird unterbrochen und die Drehbewegung des Messflügels setzt aus. Sobald das Füllgut den Messflügel wieder frei gibt, wird der Motor wieder von seiner Schaltlage in seine Ruhelage versetzt, und der Messflügel beginnt sich erneut zu drehen. Des Weiteren wird bei Bedeckung des Messflügels ein Schaltkontakt geschlossen, welcher dem Benutzer das Erreichen des Füllstands signalisiert.

Ein derartiges Messgerät wird von der Anmelderin unter dem Namen Soliswitch angeboten und vertrieben.

Bei den bestehenden Drehflügelgrenzschaltern besteht jedoch das Problem, dass eine bspw. durch eine Beschädigung verursachte Funktionsstörung des Drehflügelgrenzschalters nicht ohne weiteres Überwacht und/oder Erkannt werden kann. Aus dem Stand der Technik sind Drehflügelgrenzschalter bekannt geworden, die einen separaten Schaltkontakt zur Störungsmeldung aufweisen. Über diesen Schaltkontakt wird dann bspw. der Ausfall der Netzspannung, welche zum Betreiben des Drehflügelgrenzschalters dient angezeigt. Ferner ist es auch bekannt geworden eine Laufüberwachung der Antriebswelle des Drehflügelgrenzschalters durchzuführen und über den separaten Schaltkontakt anzuzeigen. Diese aus dem Stand der Technik bekannten Ausführungen weisen also zusätzliche bzw. separate Signalausgänge auf, über die einen Benutzer Informationen über den Zustand des Drehflügelgrenzschalters und/oder den Füllstand vermittelt werden.

Der Erfindung liegt somit die Aufgabe zugrunde, eine alternative bzw. einfachere Möglichkeit anzugeben, den Füllstand und gleichzeitig die bestimmungsgemäße Funktion des Drehflügelgrenzschalters zu überwachen und/oder anzuzeigen. Die Aufgabe kann ferner darin gesehen werden, den Aufwand an zusätzlichen Bauteilen, insbesondere zur Auswertung eines Zustands des Drehflügelgrenzschalters, zu reduzieren.

Die Aufgabe wird erfindungsgemäß durch einen Drehflügelgrenzschalter und ein Verfahren zum Betreiben eines Drehflügelgrenzschalters gelöst.

Hinsichtlich des Drehflügelgrenzschalters wird die Aufgabe durch einen Drehflügelgrenzschalter zur Bestimmung und Signalisierung des Füllstands, insbesondere eines Grenzstands, eines Füllguts in einem Behälter gelöst, wobei der Drehflügelgrenzschalter eine von einem Motor getriebene Antriebswelle aufweist, an welcher Antriebswelle ein Drehflügel anbringbar ist,
wobei zur Funktionsüberwachung des Drehflügelgrenzschalters ein erster Signalgeber vorgesehen ist, der vorzugsweise zur Funktionsüberwachung der Antriebswelle dient und besonders bevorzugt mit der Antriebswelle wirkverbunden ist, wobei der erste Signalgeber ein erstes Ausgangssignal ausgibt, das vorzugsweise zur Störungsmeldung dient,
wobei zur Erkennung einer Auslenkbewegung des Motors des Drehflügelgrenzschalters ein zweiter Signalgeber vorgesehen ist, der ein zweites Ausgangssignal ausgibt,
wobei ein Signalausgang zur Signalisierung des Füllstands vorgesehen ist, und wobei eine Ansteuerung des Signalausgangs vermittels einer elektrischen bzw. elektronischen und/oder mechanischen Schaltanordnung in Abhängigkeit des ersten Ausgangssignals und des zweiten Ausgangssignals erfolgt.

Es ist somit eine Idee der vorliegenden Erfindung, den Signalausgang des Drehflügelgrenzschalters auch zur Meldung bzw. Anzeige einer Störung des bestimmungsgemäßen Betriebs des Drehflügelgrenzschalters zu verwenden. Zur Erkennung einer derartigen Störung, d.h. zur Funktionsüberwachung des Drehflügelgrenzschalters, ist der erste Signalgeber vorgesehen. Vermittels dieses ersten Signalgebers kann dann bspw. eine Laufüberwachung der Antriebswelle, ein Ausfall der Netzspannung, die zum Betreiben des Drehflügelgrenzschalters dient, etc. angezeigt werden. Ferner kann durch den ersten Signalgeber auch eine quantitative Drehzahlüberwachung erfolgen. Außerdem kann der erste Signalgeber einen Betriebsstrom und/oder Signalstrom überwachen und im Fall einer Abweichung von einem vorgegebenen Soll- bzw. Schwellwert eine entsprechendes Ausgangssignal zur Verfügung stellen.

Der Motor des vorgeschlagenen Drehflügelgrenzschalters lässt die Antriebswelle mit einem daran anbringbaren Drehflügel rotieren. Wird eine vorgegebene Füllhöhe erreicht, wird die Drehbewegung des Drehflügels blockiert. Das dadurch entstehende Gegendrehmoment wird ausgenutzt, um den Motor von seiner Ruhelage in eine Schaltlage auszulenken. Dabei wird der Motor bspw. gegen einen Schalter gedreht, durch den der Motor abschaltet wird. Die Auslenkung des Motors kann durch den zweiten Signalgeber erfasst und ein entsprechendes Ausgangssignal bereitgestellt werden. Wird der Drehflügel wieder freigegeben, weil z.B. das Füllgut abgesunken ist, wird der Motor bspw. über eine Feder in seine Ruhelage, die seiner Arbeitslage entspricht, zurückgezogen. Der Schalter wird wieder gelöst, und der Drehflügel beginnt erneut zu rotieren.

Die Ansteuerung des Signalausgangs des Drehflügelgrenzschalters erfolgt über die Schaltanordnung, die das erste und das zweite Ausgangssingal bspw. anhand einer hinterlegten Logik in ein Ausgangssignal des Drehflügelgrenzschalters umsetzt.

In einer Ausführungsform des Drehflügelgrenzschalters erfolgt eine Störungsmeldung, die eine nicht bestimmungsgemäße Funktion des Drehflügelgrenzschalters anzeigt, indem ein das Erreichen eines vorgegebenen Füllstands, insbesondere Grenzstands, anzeigendes Signal, an dem Signalsausgang durch die Schaltanordnung ausgegeben wird.

Eine weitere Idee der vorliegenden Erfindung ist es, ein das Erreichen eines vorgegebenen Füllstands repräsentierendes Signal auch in einem Fehlerfall, d.h. einer Störung, auszugeben, die bspw. durch das Ausgangssignal des ersten Signalgebers angezeigt wird. Das Erreichen eines vorgegebenen und durch den Drehflügelgrenzschalter detektierten Füllstands, wird gem. dem Stand der Technik durch ein entsprechendes Signal am Signalausgang des Drehflügelgrenzschalters angezeigt. Für gewöhnlich hat dies zur Folge, dass ein Ventil oder ein anderer Aktor in dem Prozess geschaltet wird, um bspw. den Füllstand zur reduzieren, einen Prozessstillstand herbeizuführen oder den Anlagenbetreiber entsprechend zu informieren, und so fort.

In einer weiteren Ausführungsform des Drehflügelgrenzschalters ist zur Ansteuerung einer Versorgung, vorzugsweise einer Betriebselektronik, des Drehflügelgrenzschalters mit elektrischer Energie ein dritter Signalgeber vorgesehen, der ein drittes Ausgangssignal in Abhängigkeit der Auslenkbewegung des Motors erzeugt, wobei das dritte Ausgangssignal besonders bevorzugt zur An- oder Abschaltung des Motors des Drehflügelgrenzschalters dient.

Der zweite Signalgeber kann somit ebenso wie der dritte Signalgeber zur Signalisierung einer Auslenkung des Motors dienen. Dabei dient der zweite Signalgeber bevorzugt zur Ansteuerung der Schaltanordnung, über die das von dem Drehflügelgrenzschalter ausgegeben Ausgangssignal ausgegeben wird, während der der dritte Signalgeber dazu dient, den Motor an- bzw. abzuschalten (oder ein entsprechendes Ausgangssignal oder Steuersignal auszugeben), wenn ein vorgegebener Füllstand erreicht wird.

In einer weiteren Ausführungsform des Drehflügelgrenzschalters erfolgt die Ansteuerung des Schaltausgangs vermittels der Schaltanordnung in Abhängigkeit des ersten, des zweiten sowie des dritten Ausgangssignals. Zu diesem Zweck kann eine Steuereinheit wie bspw. ein Mikroprozessor vorgesehen sein, der das Ausgangssignal des ersten Signalgebers, des zweiten Signalgebers und/oder des dritten Signalgebers auswertet und entsprechend bspw. einer Logik-Tabelle die Schaltanordnung, die zur Erzeugung eines Ausgangssignals am Signalausgang des Drehflügelgrenzschalters dient, ansteuert. Bei dem ersten, dem zweiten und/oder dem dritten Ausgangssingal des ersten, zweiten bzw. dritten Signalgebers kann es sich um ein diskretes Ausgangssignal handeln, das bspw. nur als High oder Low interpretiert wird bzw. nur einen solchen High- bzw. Low-Wert annehmen kann. Alternativ kann es sich bei dem ersten, zweiten und/oder dritten Ausgangssignal auch um ein kontinuierliches Signal handeln, dessen jeweiliger Wert einen bestimmten Zustand, wie bspw. im Fall des ersten Signalgebers die Winkelgeschwindigkeit der Antriebsachse, repräsentiert.

In einer weiteren Ausführungsform des Drehflügelgrenzschalters weist der erste Signalgeber wenigstens einen ersten, insbesondere elektrischen bzw. elektronischen, Schaltkontakt auf, der in Abhängigkeit des ersten Ausgangssignals schaltet, wobei vorzugsweise wenigstens zwei Schaltkontakte dafür vorgesehen sind, wobei der zweite Signalgeber einen zweiten vorzugsweise rein mechanischen Schaltkontakt aufweist, und wobei besonders bevorzugt auch der dritte Signalgeber einen dritten vorzugsweise elektrischen bzw. elektronischen und/oder mechanischen Schaltkontakt aufweist.

Das Ausgangssingal eines Signalgebers wird somit durch wenigstens einen Schaltkontakt erzeugt bzw. steuert wenigstens einen Schaltkontakt an. Die Schaltanordnung wird bspw. .aus den Schaltkontakten gebildet, die zum Erzeugen des Ausgangssignals an dem Signalausgang des Drehflügelgrenzschalters dient.

In einer weiteren Ausführungsform des Drehflügelgrenzschalters dient der erste Schaltkontakt dazu, den zweiten Schaltkontakt, vorzugsweise bei einer vorliegenden Störung bspw. der Laufbewegung der Antriebswelle oder im Fall einer anderen nicht bestimmungsgemäßen Funktion des Drehflügelgrenzschalters, die durch den ersten Signalgeber erkannt und angezeigt wird, zu überbrücken und vorzugsweise das Erreichen eines vorgegebenen Füllstands, insbesondere Grenzstands, anzuzeigen. Somit kann selbst wenn der zweite Schaltkontakt im Fall einer Auslenkung des Motors nicht auslöst, ein entsprechendes Signal am Signalausgang des Drehflügelgrenzschalters angezeigt werden.

In einer weiteren Ausführungsform des Drehflügelgrenzschalters weist der erste Signalgeber eine Erregereinheit und eine Aufnehmereinheit, vorzugsweise in Form eines Elektrodenpaares, auf, die zumindest zeitweise einen Kondensator bilden und ein von der Erregereinheit und/oder der Aufnehmereinheit erzeugtes Ausgangssignal, insbesondere hervorgerufen durch eine Änderung der Drehbewegung der Antriebswelle, als erstes Ausgangssingal dient.

In einer weiteren Ausführungsform des Drehflügelgrenzschalters weist der erste Signalgeber eine Erregereinheit und eine Aufnehmereinheit, vorzugsweise in Form eines Spulenpaares, auf, wobei ein mittels der Erregereinheit durch Induktion hervorgerufenes Ausgangssignal der Aufnehmereinheit als erstes Ausgangssignal dient.

In einer weiteren Ausführungsform des Drehflügelgrenzschalters weist der erste Signalgeber eine Erregereinheit und eine Aufnehmereinheit, vorzugsweise in Form einer optischen Sendeeinheit und einer optischen Empfangseinheit, auf, und ein mittels der Erregereinheit durch ein optisches Signal hervorgerufenes Ausgangssignal der Aufnehmereinheit als erstes Ausgangssignal dient.

In einer weiteren Ausführungsform des Drehflügelgrenzschalters weist der erste Signalgeber eine Erregereinheit und eine Aufnehmereinheit auf, wobei die Erregereinheit wenigstens einen Permanentmagneten aufweist und die Aufnehmereinheit wenigstens einen Hall-Sensor aufweist,
und ein von der Erregereinheit hervorgerufenes Ausgangssingal der Aufnehmereinheit als erstes Ausgangssignal dient.

In einer weiteren Ausführungsform des Drehflügelgrenzschalters ist die Erregereinheit und/oder die Aufnahmereinheit mit der Antriebswelle wirkverbunden, insbesondere über ein mit der Antriebswelle verbundenes und mit der Antriebswelle zumindest zeitweise mitdrehendes Drehelement, wobei es sich bei dem Drehelement vorzugsweise um eine Drehscheibe, oder besonders bevorzugt um ein Getriebe handelt.

Eine Störungsmeldung kann neben einer entsprechenden Ansteuerung des Signalausgangs auch über eine separate Anzeigeeinheit wie bspw. einen Schaltkontakt, der nur zur Signalisierung einer Störung dient, insbesondere in Abhängigkeit des ersten Ausgangssignals, angezeigt werden. Ferner kann die Funktionsüberwachung des Drehflügelgrenzschalters erfolgen, ohne dass eine die Ansteuerung des Signalsausgangs in Abhängigkeit des Ausgangssignals des ersten Signalgebers erfolgt. In dieser Ausführungsform der Erfindung, gem. welcher eine Erregereinheit und eine Aufnehmereinheit vorgesehen sind, kann eine Störungsmeldung somit nur über einen separaten Schaltkontakt erfolgen, der von dem Signalgeber angesteuert wird.

In einer weiteren Ausführungsform des Drehflügelgrenzschalters weist der Signalausgang zur Signalisierung des Füllstands wenigstens zwei Anschlussklemmen auf, an welchen Anschlussklemmen ein in Abhängigkeit von dem wenigstens einen ersten und/oder zweiten Schaltkontakt erzeugtes Ausgangssignal abgreifbar ist, wobei ein Erreichen des vorgegebenen Füllstands anzeigendes Signal durch den ersten Schaltkontakt als auch durch den zweiten Schaltkontakt, insbesondere unabhängig von einer Schaltstellung des zweiten Schaltkontakts, an dem Signalausgang einstellbar ist. Ferner können in einer weiteren Ausführungsform drei Anschlussklemmen vorgesehen sein, die den Signalausgang des Drehflügelgrenzschalters bilden.

In einer weiteren Ausführungsform des Drehflügelgrenzschalters weist der Drehflügelgrenzschalter ein aus mehreren elektrischen und/oder elektronischen Bauteilen bestehende Betriebselektronik auf, welche Betriebselektronik zur Bereitstellung der Funktion bzw. der Funktionen und/oder der Funktionalität bzw. der Funktionalitäten des Drehflügelgrenzschalters dient. Die Betriebselektronik besteht dabei bspw. aus einem Mikroprozessor mit einer Schalt-Logik oder einer den Motor des Drehflügelgrenzschalters steuernden Elektronik etc.

In einer weiteren Ausführungsform des Drehflügelgrenzschalters dient wenigstens eine Aufnehmereinheit zur Aufnahme von durch die Betriebselektronik des Drehflügelgrenzschalters erzeugten Störeinflüssen, insbesondere elektrischen und/oder magnetischen Feldern. Insbesondere in dem Fall, dass die Aufnehmereinheit zur Detektion von elektromagnetischen Signalen dient, kann sie zudem zur Detektion von elektromagnetischen Störungen dienen.

In einer weiteren Ausführungsform des Drehflügelgrenzschalters ist die Aufnehmereinheit zum Aufnehmen von durch stromführende Leitungen der Betriebselektronik des Drehflügelgrenzschalters verursachte elektrische und/oder magnetische Felder dient, und vorzugsweise in der Umgebung besagter stromführender Leitungen angeordnet.

In einer weiteren Ausführungsform des Drehflügelgrenzschalters dient die Aufnehmereinheit ferner dazu, einen Fehlerzustand, insbesondere eine Störung, des Drehflügelgrenzschalters und/oder einen bestimmungsgemäßen Stillstand der Antriebswelle bei Füllstandserreichen zu ermitteln und anzuzeigen.

Hinsichtlich des Verfahrens wird die Aufgabe dadurch ein Verfahren zum Betreiben eines Drehflügelgrenzschalters gelöst, wobei eine Antriebswelle, die dazu dient, einen Drehflügel in Rotation zu versetzen, von einem Motor angetrieben wird, wobei eine elektrische und/oder mechanische Schaltanordnung zur Signalisierung eines Füllstands in Abhängigkeit eines ersten Ausgangssignals und eines zweiten Ausgangssignals geschaltet wird, wobei das erste Ausgangssignal von einem ersten Signalgeber, der zur Funktionsüberwachung des Drehflügelgrenzschalters, vorzugsweise der Antriebswelle, dient, ausgegeben wird, und wobei das zweite Ausgangssignal von einem zweiten Signalgeber, der Erkennung einer Auslenkbewegung des Motors dient, ausgegeben wird. Die in Zusammenhang mit dem Drehflügelgrenzschalter genannten Ausführungsformen können analog auch auf das Verfahren zum Betreiben des Drehflügelgrenzschalters angewandt werden.

Die Erfindung wird anhand der nachfolgenden Zeichnungen näher erläutert. Es zeigt:
Fig. 1: eine schematische Darstellung eines Drehflügelgrenzschalters, mit einer auf einer Drehscheibe angebrachten Erregereinheit sowie einer Aufnehmereinheit zur Laufüberwachung der Antriebswelle,
Fig. 2: eine schematische Darstellung einer Schaltung zur Signalisierung eines Zustands des Drehflügelgrenzschalters über mehrere Anschlussklemmen.

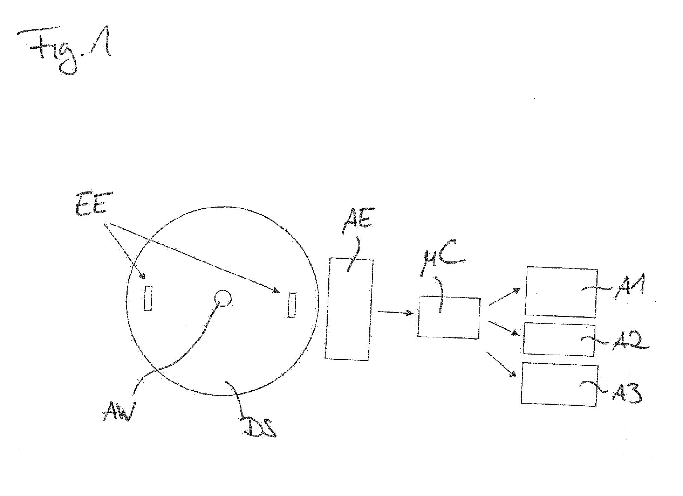

Figur 1 zeigt eine schematische Darstellung eines vorgeschlagenen Drehflügelgrenzschalters. Dabei ist eine Antriebswelle AW, über die ein Drehflügel in Rotation gebracht wird, mit einem Drehelement, hier in Form einer Drehscheibe DS verbunden. Auf der Drehscheibe DS, die mit der Antriebswelle AW mitrotiert, sind zwei Erregereinheiten EE angebracht. Stattdessen können aber auch nur eine oder mehr als zwei Erregereinheiten EE an dem Drehelement angebracht sein. Alternativ können auch mehrere Drehelemente vorgesehen sein, auf denen jeweils wenigstens eine Erregereinheit aufgebracht ist. Im gezeigten Ausführungsbeispiel sind die Erregereinheiten EE diametral zueinander in einem vorgegebnen Abstand zur Antriebswelle AW, die auch die Drehachse bildet angebracht. Es sind aber auch andere von der diametralen Anordnung abweichende Anordnungen der Erregereinheiten EE möglich. Durch die Aufnehmereinheit AE kann die Position einer oder mehrerer Erregereinheiten EE erfasst werden. So kann bspw. der Durchgang einer oder mehrerer Erregereinheiten EE durch eine durch die Aufnehmereinheit gebildete Messstrecke erfasst werden. Zu diesem Zweck können die Erregereinheiten EE bspw. symmetrisch auf dem Drehelement angeordnet sein, so dass die Aufnahmeeinheit AE periodisch entsprechende pulsförmige Ausgangssignale zur Verfügung stellt.

Die von der Aufnehmereinheit AE erzeugten Ausgangssignale können dann bspw. vermittels einer Datenverarbeitungseinheit wie einem Mikroprozessor µC ausgewertet und/oder weiterverarbeitet werden. Durch den Mikroprozessor µC oder durch das Ausgangssignal der Aufnehmereinheit AE selbst können dann bspw. ein Schaltkontakt R zur Füllstandsanzeige, oder ein Schaltkontakt S zur Überbrückung des Schaltkontakts R zur Füllstandsanzeige angesteuert werden. Ferner kann vermittels des Ausgangssignals der Aufnehmereinheit AE eine Zeitverzögerung erfolgen.

Vorzugsweise handelt es sich bei dem in Figur 1 gezeigten Ausführungsform der vorgeschlagenen Erfindung bei der Erregereinheit EE um einen ersten und einen zweiten Permanentmagneten und bei der Aufnehmereinheit AE um einen Hallsensor. Die Permanentmagneten vollführen dabei auf der Drehscheibe Kreisbewegungen und kommen bei jedem Kreisdurchgang zumindest an einem Hallsensor vorbei. Kommt also einer der Permanentmagneten bei seinem Durchgang an dem Hallsensor vorbei, so wird eine entsprechende Spannung in dem Sensor induziert, und somit die Position und/oder Drehgeschwindigkeit des Drehelements bzw. der Antriebswelle AW bestimmt.

Es können auch mehr als zwei Erregereinheiten EE und mehr als eine Aufnehmereinheit AE verwendet werden um die Drehbewegung der Antriebswelle AE und/oder anderer Störgrößen zu ermitteln.

Insbesondere können auch andere Messprinzipien, die bspw. dem kapazitiven, induktiven oder optischem Messprinzip arbeiten, zur Laufbewegung der Antriebswelle AW verwendet werden. Ferner können sowohl die Erregereinheit EE als auch die Aufnehmereinheit AE auf dem Drehelement angeordnet sein. Alternativ ist die Aufnehmereinheit AE auf dem mit der Antriebswelle AW mitdrehenden Drehelement angeordnet und die Erregereinheit EE ist daneben angeordnet, so dass sie sich nicht mit der Antriebswelle AW mitdreht. Ferner ist es auch möglich sowohl Erregereinheit EE als auch Aufnehmereinheit AE so in dem Drehflügelgrenzschalter anzuordnen, dass sie nicht mit dem Drehelement mitdrehen, die Antriebswelle AW und/oder das Drehelement jedoch die Signalübertragung zwischen Erregereinheit und Aufnehmereinheit derartig beeinflusst, dass dadurch die Drehbewegung der Antriebswelle überwacht werden kann. Dies kann bspw. optisch durch Blenden oder Spiegel oder andere einen Signalpfad zwischen Erregereinheit EE und Aufnehmereinheit AE beeinflussende Mittel erfolgen.

Somit kann eine absolute Drehzahlüberwachung vermittels der Aufnehmereinheit AE, ob sich also die Antriebswelle AW dreht oder nicht, erfolgen, zudem kann eine Drehzahlüberwachung bzw. Laufüberwachung erfolgen, bei der die Drehgeschwindigkeit, bzw. die Winkelgeschwindigkeit mit der die Antriebswelle AW rotiert, bestimmt und/oder überwacht wird.

Durch die Aufnehmereinheit AE kann zudem die Überwachung anderer Störeinflüsse auf die Funktionsfähigkeit des Drehflügelgrenzschalters erfolgen. Dabei kann es sich bspw. um elektromagnetische Strahlung handeln, die von Betriebsstrom und/oder Signalstrom führenden Leitung(en) ausgeht.

Somit kann die Aufnehmereinheit AE ein aus dem Signal der Erregereinheit(en) EE und einem durch Störungen hervorgerufen Signal überlagerndes Signal erfassen. Die Aufnehmereinheit AE gibt daraufhin ein entsprechendes Ausgangssignal aus, das bspw. durch den Mikroprozessor µC oder eine andere Datenverarbeitungseinheit ausgewertet werden kann. Weicht das Ausgangssignal um einen vorgegebenen Wert von einem zu erwartenden oder hinterlegten Ausgangssignal ab, so kann dies bspw. einem Benutzer angezeigt werden oder sicherheitsgerichtete Maßnahmen getroffen werden, bspw. indem eine erste, zweite und/oder dritte Ansteuerschaltung angesteuert wird. Diese Ansteuerschaltungen können dann bspw. unterschiedliche Aktionen ausführen, wie bspw. ein das Erreichen eines vorgegebenen Füllstands anzeigendes Signal über den Signalausgang des Drehflügelgrenzschalters ausgeben oder einen separaten Schaltkontakt für eine Fehleranzeige ansteuern.

Anstatt einer einzigen wie in Figur 1 gezeigten Aufnehmereinheit AE können natürlich auch mehrere Aufnehmereinheiten verwendet werden. Ferner kann die Drehscheibe DS vorzugsweise mittig und im rechten Winkel mit der Antriebswelle AW, besonders bevorzugt starr, verbinden sein. Andererseits ist auch eine Verbindung zwischen Drehelement und Antriebswelle über eine Getriebe wie bspw. ein zusätzliches Zahnrad möglich. Durch eine derartige Übersetzung der Drehbewegung der Antriebswelle AW könnte eine frühzeitige und/oder genauere Erkennung einer Störung in der Drehbewegung der Antriebswelle AW erfolgen.

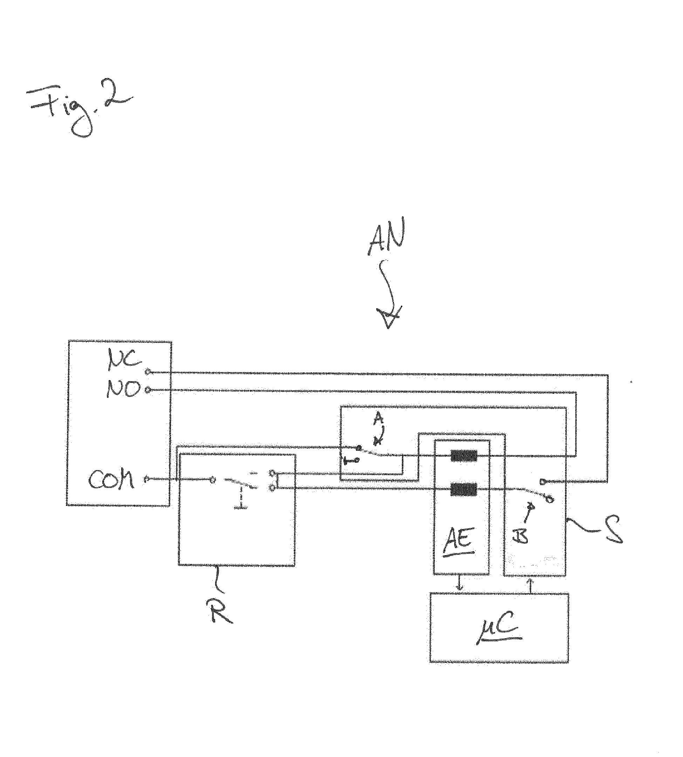

Figur 2 zeigt eine schematische Darstellung einer Schaltanordnung AN mit mehreren Schaltkontakten R, S zum Betreiben des Drehflügelgrenzschalters in Abhängigkeit des Ausgangsignals der Aufnehmereinheit AE. Bei der gezeigten Schaltung handelt es sich um eine Schaltanordnung AN, die zur Ansteuerung des Signalausgangs NC, NO, COM des Drehflügelgrenzschalters dient. Das Ausgangssignal kann dabei über zwei Anschlussklemmen NO, NC gegenüber einer dritten Anschlussklemme COM abgegriffen werden. Zu diesem Zweck wird der Drehflügelgrenzschalter bspw. über die Anschlussklemmen NC, NO, COM an ein Speisegerät angeschlossen, das den Drehflügelgrenzschalter mit elektrischer Energie versorgt. Durch Schalten der Schaltanordnung AN kann nun die Versorgung eines ebenfalls an die Anschlussklemmen NC, NO, COM angeschlossenen weiteren Feldgerätes wie bspw. eines Aktors, insbesondere eines Ventils, in Abhängigkeit des Füllstandssignals gesteuert werden.

Die Aufnehmereinheit AE besteht dabei in Figur 2 aus zwei Sensoren AE, die die Drehbewegung der Antriebswelle AW überwachen als auch zur Detektion anderer Störeinflüsse dienen. Zu diesem Zweck sind die Sensoren AE in der Umgebung je nach Schaltzustand der Schaltanordnung stromführenden oder stromlosen Leitungen angeordnet, so dass ein Stromfluss in den Leitungen ermittelt und/oder überwacht werden kann. Das Ergebnis einer derartigen Überwachung kann dann ebenfalls zur Funktionsüberwachung des Drehflügelgrenzschalters genutzt werden. Das Ausgangsignal der Sensoren EE wird dann einem Mikrocontroller bereitgestellt, der einen ersten Schaltkontakt S mit einem ersten und einem zweiten Umschaltkontakt A, B schaltet. Ferner weist die Schaltanordnung AN einen zweiten Schaltkontakt R auf, der in Abhängigkeit der Schaltlage des Motors des Drehflügelgrenzschalters schaltet.

Im in Figur 2 gezeigten Ausführungsbeispiel hat der erste Umschaltkontakt A den zweiten Schaltkontakt R überbrückt, während gleichzeitig der zweite Umschaltkontakt B den vom zweiten Schaltkontakt R angesteuerten Signalpfad unterbricht. Dies entspricht der Situation in der eine Störung des Drehflügelgrenzschalters von dem ersten Signalgeber EE, AE erfasst wird, der zweite Signalgeber bzw. Schaltkontakt jedoch bspw. aufgrund dieser Störung nicht schaltet oder defekt ist.

Die vorgeschlagene Erfindung kann somit vorteilhaft zur Überwachung des zweiten Schaltkontakts R eingesetzt werden. Der zweite Schaltkontakt R dient dabei zur Ausgabe eines das Erreichen eines Grenzstands anzeigenden Signals, wobei der zweite Schaltkontakt R durch die Auslenkung des Motors des Drehflügelgrenzschalters geschaltet wird, indem dieser bspw. den zweiten Schaltkontakt mechanisch auslöst.

Anstelle der zur Überwachung der Antriebswelle verwendeten Sensoren bzw. Aufnehmereinheiten, wie bspw. Hall-Sensoren können einerseits Hall-Sensoren zur Laufüberwachung und andererseits Hall-Sensoren zur Überwachung von Betriebsströmen in Abhängigkeit der Schaltanordnung zeitweise stromführenden bzw. stromlosen Leitungen, sowie zur Ermittlung von elektromagnetischen Störungen dienen. Zur Auswertung der von diesen Aufnehmereinheiten ausgegebenen Ausgangssignale wäre bspw. nur ein entsprechend angepasster Mikroprozessor µC o.ä. erforderlich. Bspw. können zur Überwachung zumindest zeitweise stromführende Leitungen, die zu deren Überwachung dienenden Hall-Sensoren, in deren unmittelbarer Umgebung angeordnet sein. Diese Leitungen können zu diesem Zweck auch spulenförmig und mit angepasster Windungszahl geformt sein.

Durch die vorgeschlagene Erfindung können somit blockierende Effekte, wie sie bspw. bei der Inbetriebnahme des Drehflügelgrenzschalters auftreten erfasst werden. Ferner kann ein Überlastzustand, ein Netzspannungsausfall oder eine Netzspannungsstörung erkannt und/oder entsprechend signalisiert werden.

### Bezugszeichenliste

- EE: Erregereinheit
- AW: Antriebswelle
- DS: Drehscheibe
- AE: Aufnehmereinheit
- µC: Mikrocontroller
- A1: erste Ansteuerschaltung
- A2: zweite Ansteuerschaltung
- A3: dritte Ansteuerschaltung
- NC: erste Anschlussklemme
- NO: zweite Anschlussklemme
- COM: dritte Anschlussklemme
- R: zweiter Schaltkontakt
- A: erster Umschaltkontakt
- B: zweiter Umschaltkontakt
- S: erster Schaltkontakt
- AN: Schaltanordnung

## Patentansprüche

1. Drehflügelgrenzschalter zur Bestimmung und Signalisierung des Füllstands, insbesondere eines Grenzstands, eines Füllguts in einem Behälter,
wobei der Drehflügelgrenzschalter eine von einem Motor getriebene Antriebswelle (AW) aufweist, an welcher Antriebswelle (AW) ein Drehflügel anbringbar ist,
wobei zur Funktionsüberwachung des Drehflügelgrenzschalters ein erster Signalgeber (EE, AE) vorgesehen ist, der vorzugsweise zur Funktionsüberwachung der Antriebswelle (AW) dient und besonders bevorzugt mit der Antriebswelle (AW) wirkverbunden ist, wobei der erste Signalgeber (EE, AE) ein erstes Ausgangssignal ausgibt, das vorzugsweise zur Störungsmeldung dient,
wobei zur Erkennung einer Auslenkbewegung des Motors des Drehflügelgrenzschalters ein zweiter Signalgeber vorgesehen ist, der ein zweites Ausgangssignal ausgibt,
wobei ein Signalausgang (NC, NO, COM) zur Signalisierung des Füllstands vorgesehen ist, und wobei eine Ansteuerung des Signalausgangs (NC, NO, COM) vermittels einer elektrischen bzw. elektronischen und/oder mechanischen Schaltanordnung (AN) in Abhängigkeit des ersten Ausgangssignals und des zweiten Ausgangssignals erfolgt.

2. Drehflügelgrenzschalter nach dem vorherigen Anspruch,
wobei eine Störungsmeldung erfolgt, die eine nicht bestimmungsgemäße Funktion des Drehflügelgrenzschalters anzeigt, indem ein das Erreichen eines vorgegebenen Füllstands, insbesondere Grenzstands, anzeigendes Signal, an dem Signalsausgang (NC, NO, COM) durch die Schaltanordnung (AN) ausgegeben wird.

3. Drehflügelgrenzschalter nach Anspruch 1 oder 2,
wobei zur Ansteuerung einer Versorgung, vorzugsweise einer Betriebselektronik, des Drehflügelgrenzschalters mit elektrischer Energie ein dritter Signalgeber vorgesehen ist, der ein drittes Ausgangssignal in Abhängigkeit der Auslenkbewegung des Motors erzeugt, wobei das dritte Ausgangssignal besonders bevorzugt zur An- oder Abschaltung des Motors des Drehflügelgrenzschalters dient.

4. Drehflügelgrenzschalter nach dem vorherigen Anspruch,
wobei die Ansteuerung des Signalausgangs (NO, NC, COM) vermittels der Schaltanordnung (AN) in Abhängigkeit des ersten, des zweiten sowie des dritten Ausgangssignals erfolgt.

5. Drehflügelgrenzschalter nach einem der vorherigen Ansprüche,
wobei der erste Signalgeber (EE, AE) wenigstens einen ersten, insbesondere elektrischen bzw. elektronischen, Schaltkontakt (S) aufweist, der in Abhängigkeit des ersten Ausgangssignals schaltet, wobei vorzugsweise wenigstens zwei Umschaltkontakte (A, B) dafür vorgesehen sind,
wobei der zweite Signalgeber einen zweiten vorzugsweise rein mechanischen Schaltkontakt (R) aufweist, und
wobei besonders bevorzugt auch der dritte Signalgeber einen dritten vorzugsweise elektrischen bzw. elektronischen und/oder mechanischen Schaltkontakt aufweist.

6. Drehflügelgrenzschalter nach einem der vorherigen Ansprüche,
wobei der erste Schaltkontakt (S) dazu dient, den zweiten Schaltkontakt (R), vorzugsweise bei einer vorliegenden Störung bspw. der Laufbewegung der Antriebswelle (AW) oder im Fall einer anderen nicht bestimmungsgemäßen Funktion des Drehflügelgrenzschalters, die durch den ersten Signalgeber (EE, AE) erkannt und angezeigt wird, zu überbrücken und vorzugsweise das Erreichen eines vorgegebenen Füllstands, insbesondere Grenzstands, anzuzeigen.

7. Drehflügelgrenzschalter nach einem der vorherigen Ansprüche,
wobei der erste Signalgeber (EE, AE) eine Erregereinheit (EE) und eine Aufnehmereinheit (AE), vorzugsweise in Form eines Elektrodenpaares, aufweist, die zumindest zeitweise einen Kondensator bilden und ein von der Erregereinheit (EE) und/oder der Aufnehmereinheit (AE) erzeugtes Ausgangssignal, insbesondere hervorgerufen durch eine Änderung der Drehbewegung der Antriebswelle (AW), als erstes Ausgangssingal dient.

8. Drehflügelgrenzschalter nach einem der vorherigen Ansprüche,
wobei der erste Signalgeber (EE, AE) eine Erregereinheit (EE) und eine Aufnehmereinheit (AE, vorzugsweise in Form eines Spulenpaares, aufweist, wobei ein mittels der Erregereinheit (EE) durch Induktion hervorgerufenes Ausgangssignal der Aufnehmereinheit (AE) als erstes Ausgangssignal dient.

9. Drehflügelgrenzschalter nach einem der vorherigen Ansprüche,
wobei der erste Signalgeber (EE, AE) eine Erregereinheit (EE) und eine Aufnehmereinheit (AE), vorzugsweise in Form einer optischen Sendeeinheit und einer optischen Empfangseinheit, aufweist, und ein mittels der Erregereinheit (EE) durch ein optisches Signal hervorgerufenes Ausgangssignal der Aufnehmereinheit (AE) als erstes Ausgangssignal dient.

10. Drehflügelgrenzschalter nach einem der vorherigen Ansprüche,
wobei der erste Signalgeber (EE, AE) eine Erregereinheit (EE) und eine Aufnehmereinheit (AE) aufweist, wobei die Erregereinheit (EE) wenigstens einen Permanentmagneten aufweist und die Aufnehmereinheit (AE) wenigstens einen Hall-Sensor aufweist,
und ein von der Erregereinheit (EE) hervorgerufenes Ausgangssingal der Aufnehmereinheit (AE) als erstes Ausgangssignal dient.

11. Drehflügelgrenzschalter nach der Ansprüche 7 bis 10,
wobei die Erregereinheit (EE) und/oder die Aufnahmereinheit (AE) mit der Antriebswelle (AW) wirkverbunden ist, insbesondere über ein mit der Antriebswelle (AW) verbundenes und mit der Antriebswelle (AW) zumindest zeitweise mitdrehendes Drehelement, wobei es sich bei dem Drehelement vorzugsweise um eine Drehscheibe (DS), oder besonders bevorzugt um ein Getriebe handelt.

12. Drehflügelgrenzschalter nach einem der vorherigen Ansprüche,
wobei der Signalausgang (NO, NC, COM) zur Signalisierung des Füllstands wenigstens zwei Anschlussklemmen aufweist,
an welchen Anschlussklemmen (NO, NC, COM) ein in Abhängigkeit von dem wenigstens einen ersten und/oder zweiten Schaltkontakt (R, S) erzeugtes Ausgangssignal abgreifbar ist, wobei ein Erreichen des vorgegebenen Füllstands anzeigendes Signal durch den ersten Schaltkontakt (S) als auch durch den zweiten Schaltkontakt (R), insbesondere unabhängig von einer Schaltstellung des zweiten Schaltkontakts (R), an dem Signalausgang einstellbar ist.

13. Drehflügelgrenzschalter nach einem der vorherigen Ansprüche,
wobei der Drehflügelgrenzschalter ein aus mehreren elektrischen und/oder elektronischen Bauteilen bestehende Betriebselektronik aufweist,
welche Betriebselektronik zur Bereitstellung der Funktion bzw. der Funktionen und/oder der Funktionalität bzw. der Funktionalitäten des Drehflügelgrenzschalters dient.

14. Drehflügelgrenzschalter nach einem der Ansprüche 7 bis 13,
wobei wenigstens eine Aufnehmereinheit (AE) zur Aufnahme von durch die Betriebselektronik des Drehflügelgrenzschalters erzeugten Störeinflüssen, insbesondere elektrischen und/oder magnetischen Feldern, dient.

15. Drehflügelgrenzschalter nach Anspruch 13 oder 14,
wobei die Aufnehmereinheit (AE) zum Aufnehmen von durch stromführende Leitungen der Betriebselektronik des Drehflügelgrenzschalters verursachte elektrische und/oder magnetische Felder dient, und vorzugsweise in der Umgebung besagter stromführender Leitungen angeordnet ist.

16. Drehflügelgrenzschalter nach einem der vorherigen Ansprüche,
wobei die Aufnehmereinheit (AE) ferner dazu dient, einen Fehlerzustand, insbesondere eine Störung, des Drehflügelgrenzschalters und/oder einem bestimmungsgemäßen Stillstand der Antriebswelle (AW) bei Füllstandserreichen zu ermitteln und anzuzeigen.

17. Verfahren zum Betreiben eines Drehflügelgrenzschalters,
wobei eine Antriebswelle (AW), die dazu dient, einen Drehflügel in Rotation zu versetzen, von einem Motor angetrieben wird,
wobei eine elektrische und/oder mechanische Schaltanordnung (AN) zur Signalisierung eines Füllstands in Abhängigkeit eines ersten Ausgangssignals und eines zweiten Ausgangssignals geschaltet wird,
wobei das erste Ausgangssignal von einem ersten Signalgeber (EE, AE), der zur Funktionsüberwachung des Drehflügelgrenzschalters, vorzugsweise der Antriebswelle (AE), dient, ausgegeben wird,
und wobei das zweite Ausgangssignal von einem zweiten Signalgeber, der Erkennung einer Auslenkbewegung des Motors dient, ausgegeben wird.
